# EUROPÄISCHE PATENTANMELDUNG

(11) **EP 2 418 788 A1**
(43) Veröffentlichungstag der Anmeldung: **15.02.2012**
(21) Anmeldenummer: 11006378.1
(22) Anmeldetag: 03.08.2011
(51) Int. Cl.: H04B 10/105, H04B 7/185

(54) **Verfahren und System zum Nachführen zweier Kommunikationsteilnehmer eines optischen Satelliten-Kommunikationssystems**

(30) Priorität: 11.08.2010 DE 102010034065
(71) Anmelder: Astrium GmbH, 82024 Taufkirchen (DE)
(72) Erfinder: Von Schwake, Jens, 85579 Neubiberg (DE)
(74) Vertreter: Avenhaus, Beate

(57) **Zusammenfassung**

Die Erfindung beschreibt ein Verfahren zum Nachführen zweier Kommunikationsteilnehmer eines optischen Satelliten-Kommunikationssystems, insbesondere eines Satelliten und einer Bodenstation, zur Bereitstellung einer optischen Kommunikationsverbindung zwischen den zwei Kommunikationsteilnehmem. In dem erfindungsgemäßen Verfahren überträgt ein erster der beiden Kommunikationsteilnehmer ein optisches Signal (15) an einen zweiten der beiden Kommunikationsteilnehmer. Der zweite Kommunikationsteilnehmer umfasst eine Detektoranordnung mit mehreren Detektoren (12, 13, 19) in einer gemeinsamen Empfangsebene (22), durch die jeweils die Phase des Signals (15) erfasst wird, wobei durch ein Phasenverarbeitungsmittel Phasendifferenzen zwischen den Phasen des Signals ermittelt werden. Aus den Phasendifferenzen wird ein Fehlwinkel (18) der Ausrichtung des Signals zu der Empfangsebene ermittelt. Der Fehlwinkel (18) wird durch einen Nachführrechner verarbeitet, um die Empfangseinheit des jeweiligen Kommunikationsteilnehmers auf das Signal auszurichten, so dass die Phasendifferenzen Null ergeben. Dabei werden die Detektoren (12, 13, 19) kontinuierlich kalibriert.

## Beschreibung

Die Erfindung betrifft ein Verfahren und ein System zum Nachführen zweier Kommunikationsteilnehmer eines optischen Satelliten-Kommunikationssystems, insbesondere eines Satelliten und einer Bodenstation, zur Bereitstellung einer optischen Kommunikationsverbindung zwischen den zwei Kommunikationsteilnehmern.

Bei der sog. lnter Satellite Link (ISL)-Kommunikation auf Grundlage von Datenübertragungstechniken im optischen Bereich zwischen LEO (Low Earth Orbit)-Satelliten und Bodenstationen oder GEO-Satelliten und Bodenstationen wird typischerweise On-Off-Keying (OOK) als Modulationsverfahren eingesetzt. Die genannte ISL-Kommunikation basiert üblicherweise auf einem optischen Datensignal mit einer Wellenlänge von 1550 nm. Neben OOK als Modulationsverfahren ist in jüngerer Zeit auch B-PSK (Phase Shift Modulation) im Rahmen einer Satellitenkommunikation verwendet worden.

Für die Kommunikation mithilfe von optischen Übertragungsverfahren und - techniken, wie z.B. mit Laserterminals zweier Kommunikationsteilnehmer, ist es besonders notwendig, dass deren Sende- und Empfangseinrichtungen sehr exakt zueinander ausgerichtet sind. Zur Nachführung der Kommunikationsteilnehmer, d.h. deren Antennen, können z.B. errechnete Positionsdaten der Bodenstation und des Satelliten verwendet werden. Meist wird für die Nachführung auch ein in dem Satellit bzw. der Bodenstation vorgesehener Sensor, ein sogenannter 4 Quadranten Sensor in Verbindung mit einer FPA- Ebene, zur Erfassung der Maximalamplitude eines zusätzlichen Nachführ- bzw. Bakensignals, eines sog. Beacon, verwendet, welches von der jeweiligen Gegenstation ausgesendet wird. Die kontinuierliche Nachführung wird generell als Tracking bezeichnet. Im Rahmen der Kommunikation stellt der Satellit typischerweise einen Sender und die Bodenstation einen Empfänger dar. Der Empfänger, d.h. die Bodenstation, wird entsprechend der ermittelten Informationen auf den Sender, d.h. den Satelliten, ausgerichtet.

Ein Nachteil des auf der Auswertung von Amplitudenmaxima basierenden Nachführ-Verfahrens ist die mangelnde Genauigkeit. Dies resultiert unter anderem daraus, dass die verwendete optische Kommunikation sowie dessen verwendete Modulationsverfahren OOK und PSK Atmosphäreneinflüssen unterliegen. Um ein auf einer optischen Kommunikationsverbindung basierendes Nachführverfahren über lange Distanzen von beispielsweise mehr als 100000 km, oder auch sog. Deep Space Kommunikation realisieren zu können, werden optische Verbindungen mit geringeren Strahlbreiten benötigt. Dies erfordert jedoch ein verbessertes Nachführverfahren.

Aus Patent Abstracts of Japan, JP 11014727 ist ein Verfahren bekannt, bei dem ein Kommunikationsteilnehmer ein herkömmliches HF-Signal an einen anderen Kommunikationsteilnehmer überträgt. Der andere Kommunikationsteilnehmer umfasst eine Antennenanordnung mit mehreren Antennen, durch die jeweils eine Phase des Signals erfasst wird. Aus den Phasen wird eine Phasendifferenz zwischen den von den Antennen empfangenen Phasen ermittelt. Aus der Phasendifferenz wird ein Fehlwinkel der Ausrichtung des Signals zu der Empfangsebene ermittelt. Durch eine Veränderung der Ausrichtung des empfangenden Kommunikationsteilnehmers wird der Fehlwinkel derart verändert, so dass die Phasendifferenz zu Null wird.

Es ist Aufgabe der vorliegenden Erfindung, ein Verfahren und ein System anzugeben, mit denen eine verbesserte Tracking-Performance zweier Kommunikationsteilnehmer eines optischen Satelliten-Kommunikationssystems erzielt wird.

Diese Aufgaben werden gelöst durch ein Verfahren mit den Merkmalen des Patentanspruches 1 und ein System mit den Merkmalen des Patentanspruches 9. Vorteilhafte Ausgestaltungen ergeben sich aus den abhängigen Patentansprüchen.

Die Erfindung schafft ein Verfahren zum Nachführen zweier Kommunikationsteilnehmer eines optischen Satelliten-Kommunikationssystems, insbesondere eines Satelliten bzw. dessen optischer Sendeeinheit sowie einer Bodenstation, zur Bereitstellung einer Kommunikationsverbindung zwischen den zwei Kommunikationsteilnehmem. Bei dem erfindungsgemäßen Verfahren überträgt ein erster der beiden Kommunikationsteilnehmer ein Signal an einen zweiten der beiden Kommunikationsteilnehmer. Der zweite Kommunikationsteilnehmer umfasst eine Detektoranordnung mit mehreren, insbesondere mehr als drei, Detektoren in einer gemeinsamen Empfangsebene, durch die jeweils die Phase des Signals erfasst wird, wobei durch ein Phasenverarbeitungsmittel Phasendifferenzen zwischen den Phasen ermittelt werden. Durch die mehreren Detektoren wird die gewünschte Empfangsebene aufgespannt. Aus den Phasendifferenzen wird ein Fehlwinkel der Ausrichtung des Signals zu der Empfangsebene ermittelt. Der Fehlwinkel wird durch einen Nachführrechner verarbeitet, um die Empfangseinheit des jeweiligen Kommunikationsteilnehmers auf das Signal auszurichten, so dass die Phasendifferenz zu Null wird. Erfindungsgemäß werden die Detektoren der Detektoranordnung kontinuierlich kalibriert.

Um einen optimalen Datenaustausch zwischen beiden Kommunikationsteilnehmern, also Sender wie auch Empfänger, sicherzustellen, wird zweckmäßigerweise jeweils eine solche Trackingeinheit sowohl beim Sender als auch beim Empfänger eingesetzt.

Auf diese Weise lässt sich eine gegenüber dem Stand der Technik bessere Genauigkeit bei der Ermittlung des Fehlwinkels und der Nachführung der beiden Kommunikationsteilnehmer anhand des zwischen diesen übertragenen Signals, welches gegebenenfalls ein Bakensignal darstellt, erzielen. Die verbesserte Tracking-Genauigkeit kann dazu verwendet werden, um eine stärkere Bündelung des Sendestrahls zu verwenden sowie eine daraus resultierende höhere Reichweite oder bei gleicher Reichweite einer Ersparnis an benötigter Sendeenergie zu erzielen. Falls die Energie für eine Reichweitensteigerung genutzt wird, können unter diesen Umständen hochdatenratige Deep-Space-Verbindungen realisiert werden.

Es ist zur Kalibrierung notwendig mittels eines Kalibrierungssignals die Signalverzögerungen zwischen den Detektoren zu bestimmen.

Das Signal ist vorzugsweise ein zusätzlich zum eigentlichen optischen Kommunikationssignal vom Laser erzeugtes optisches Nachführsignal (Beacon). Insbesondere ist es zweckmäßig, wenn das optische Nachführsignal ein CW (Continuous Wave)-Nachführsignal ist. Es kann weiterhin vorgesehen sein, dass das optische Nachführsignal in einem Multiplex-Signal übertragen wird, das zusätzlich einen Kommunikationsanteil umfasst. Dieses Signal könnte dann ein mit einem Code behaftetes Signal sein, welches mit Hilfe von Korrelations- bzw. Autokorrelationsfunktionen eine exakte Bestimmung der zeitlichen Verschiebung in der Empfangszeit bzgl. der jeweiligen Detektoren verwendet werden kann. Ein solches Code behaftetes Signal stellt beispielsweise die Grundlage von Galileo-Navigationssignalen dar.

Ebenso kann das Signal ein zwischen dem ersten und dem zweiten Kommunikationsteilnehmer über die optische Kommunikationsverbindung ausgetauschtes Kommunikationssignal sein. Die Kommunikationsteilnehmer verfügen hierbei über entsprechende Sende- und/oder Empfangseinheiten, zwischen welchen das Kommunikationssignal ausgetauscht wird. Bei dieser Ausgestaltung kann auf das separate Nachführsignal verzichtet werden.

Bei beiden Ausführungsvarianten - Ermittlung der Phasendifferenzen eines Nachführsignals oder eines Kommunikationssignals - sind die Detektoren der Detektoreinheit zusätzlich zu der Sende- und/oder Empfangseinheit vorgesehen; wie oben erwähnt werden mindestens 3 separate Detektoren benötigt.

Aufgrund der verwendeten Wellenlängen im optischen Bereich und der daraus resultierenden Phasenungenauigkeit bei dem Laufzeit- bzw. Gangunterscheid welcher in einer Mehrdeutigkeit mündet, wird eine Möglichkeit zur Eliminierung dieser Mehrdeutigkeit verwendet. Gemäß einer solchen zweckmäßigen Ausgestaltung wird die Periodizität der jeweiligen Phase eliminiert unter Nutzung einer FMCW-Frequenz-Rampe. Wenn die verschiedenen Detektoren auf lediglich eine Frequenzstufe (Step Frequency) abgestimmt sind, empfangen die unterschiedlichen Detektoren das rampenförmige Signal bei dieser Abstimmfrequenz zu verschiedenen Zeiten. Falls nur zu einem Zeitpunkt das Signal empfangen werden soll, dann empfangen die jeweiligen Detektoren das Signal auf unterschiedlichen Frequenzen. Im Idealfall, bei optimaler Ausrichtung der jeweiligen Terminals zueinander, empfangen alle Detektoren zur gleichen Zeit das Empfangssignal auf der gleichen Frequenz. Die Bandbreite des Frequenz-Rampensignals wird mit Bezug auf den zu erwartenden Doppler-Effekt gewählt. Die Detektoren werden auf die Mitte der Frequenzstufe bzw. Frequenzrampe abgestimmt, so dass der mögliche Doppler-Effekt sowohl bei einer positiven wie bei einer negativen Frequenzverschiebung maximal eliminiert werden kann.

Zweckmäßigerweise erfolgt die Ermittlung der Phasendifferenzen zusätzlich zur Ermittlung einer Maximalamplitude des Signals, um eine auf dieser Maximalamplitude basierende Ermittlung des Fehlwinkels mit Hilfe der Differenzsignale auf Grundlage der Phasendifferenz zu verbessern. Gemäß dieser Ausgestaltung wird die Detektoranordnung als solches nicht alleine zur Bestimmung des Fehlwinkels verwendet. Stattdessen erfolgt eine konventionelle Ermittlung des Fehlwinkels durch die Ermittlung einer Maximalamplitude des ausgewerteten Signals, wobei der hierbei ermittelte Fehlwinkel durch die zusätzliche Betrachtung jeweiliger Phasendifferenzen noch genauer ermittelt wird.

Die Erfindung schafft weiterhin ein System zum Nachführen zweier Kommunikationsteilnehmer eines optischen Satelliten-Kommunikationssystems, insbesondere eines Satelliten bzw. dessen optischer Sendeeinheit sowie einer Bodenstation, zur Bereitstellung einer optischen Kommunikationsverbindung zwischen den zwei Kommunikationsteilnehmem. Bei dem erfindungsgemäßen System umfasst ein erster der beiden Kommunikationsteilnehmer eine Sendeeinheit, mit der ein Signal an einen zweiten der beiden Kommunikationsteilnehmer übertragbar ist. Der zweite Kommunikationsteilnehmer umfasst eine Detektoranordnung mit mehreren Detektoren in einer gemeinsamen Empfangsebene, durch die jeweils die Phase des Signals erfassbar ist. Der zweite Kommunikationsteilnehmer umfasst ein Phasenverarbeitungsmittel und ein Fehlwinkelbestimmungsmittel, wobei durch das Phasenverarbeitungsmittel Phasendifferenzen zwischen den Phasen und durch das Fehlwinkel-Bestimmungsmittel aus den Phasendifferenzen ein Fehlwinkel der Ausrichtung des Signals zu der Empfangsebene ermittelbar ist. Der erste und/oder der zweite Kommunikationsteilnehmer umfassen einen Nachführrechner, dem der Fehlwinkel zur Verarbeitung bereitgestellt wird, um den ersten und/oder den zweiten Kommunikationsteilnehmer auf das Signal auszurichten, so dass sich Phasendifferenzen von Null ergeben. Das System zeichnet sich dadurch aus, dass der Detektoranordnung eine Kalibrationsanordnung zugeordnet ist, die dazu ausgebildet ist, die Detektoren der Detektoranordnung kontinuierlich zu kalibrieren.

Um einen optimalen Datenaustausch zwischen beiden Kommunikationsteilnehmern, also Sender wie auch Empfänger, sicherzustellen, wird zweckmäßigerweise jeweils eine solche Trackingeinheit sowohl beim Sender als auch beim Empfänger eingesetzt.

Das erfindungsgemäße System weist die gleichen Vorteile auf, wie diese vorstehend in Verbindung mit dem erfindungsgemäßen Verfahren beschrieben sind. Insbesondere ermöglicht das erfindungsgemäße System eine verbesserte Tracking-Genauigkeit. Aufgrund der möglichen, stärkeren Strahlbündelung des Signals kann die Reichweite zwischen ersten und zweiten Kommunikationsteilnehmern erhöht werden. Insbesondere kann die Reichweite mehr als 100000 km betragen. Alternativ kann durch die verbesserte Tracking-Genauigkeit benötigte Sendeenergie eingespart werden, wenn eine ursprüngliche Distanz zwischen den beiden Kommunikationsteilnehmern beibehalten wird. Im letzteren Fall kann unter Beibehaltung der Sendeleistung aber gleichzeitiger Verkleinerung der Strahlbündelung auch eine höhere Datenrate erzielt werden.

Zweckmäßigerweise ist in der Empfangsebene eine Sende- und/oder eine Empfangseinheit angeordnet, wobei die mehreren Detektoren um die Sende- und/oder Empfangseinheit angeordnet sind.

Gemäß einer weiteren zweckmäßigen Ausgestaltung umfasst die Detektoranordnung zumindest drei, in einer Empfangsebene angeordnete, Detektoren, welche jeweils die Phase des Signals erfassen. Die Anzahl der Detektoren kann auch mehr als 3 (drei) betragen, allerdings stellt dies aufgrund der aufzuspannenden Empfangsebene ein Minimum dar.

Es ist weiterhin zweckmäßig, wenn der jeweilige Abstand zweier Detektoren in Abstand einer vorgegebenen Genauigkeit bei der Ermittlung der Phasendifferenzen, sowie zu den vorherrschenden und in die Betrachtungen einzufließenden Umgebungseinwirkungen gewählt ist. Generell sollte der Abstand der Detektoren in Bezug zu der gewünschten Auflösung sowie den realen Umgebungseinflüssen möglichst groß gewählt werden (ca. 0,3m - 1 m).

In einer weiteren Ausgestaltung sind der erste Kommunikationsteilnehmer der Satellit, d.h. ein Sender des Kommunikationssystems, und der zweite Kommunikationsteilnehmer die Bodenstation, d.h. ein Empfänger des Kommunikationssystems. Ebenso könnte der erste Kommunikationsteilnehmer die Bodenstation und der zweite Kommunikationsteilnehmer der Satellit sein. Insbesondere ist es für eine optimale Ausrichtung der jeweiligen Terminals zueinander dienlich, dass sowohl Satellit (Sender des Kommunikationssystems) als auch Bodenstation (Empfänger des Kommunikationssystems) eine erfindungsgemäße Detektoranordnung und die weiter notwendigen Komponenten zur Ermittlung der jeweiligen Differenzphasen aufweisen. In diesem Fall können beide Kommunikationsteilnehmer auf das Kommunikationssignal nachgeführt werden.

Die Erfindung wird nachfolgend näher anhand eines Ausführungsbeispiels in der Zeichnung erläutert. Es zeigen:
- Fig. 1: eine zeichnerische Darstellung einer Empfangseinheit zur Illustration des der Erfindung zu Grunde liegenden Konzepts der Nachführung in einem Satelliten-Kommunikationssystem; und
- Fig. 2: eine Draufsicht auf die in Fig. 1 gezeigte Empfangseinheit, aus der die Anordnung von beispielhaft drei Detektoren relativ zu einem optischen Empfänger der Empfangseinheit hervorgeht.

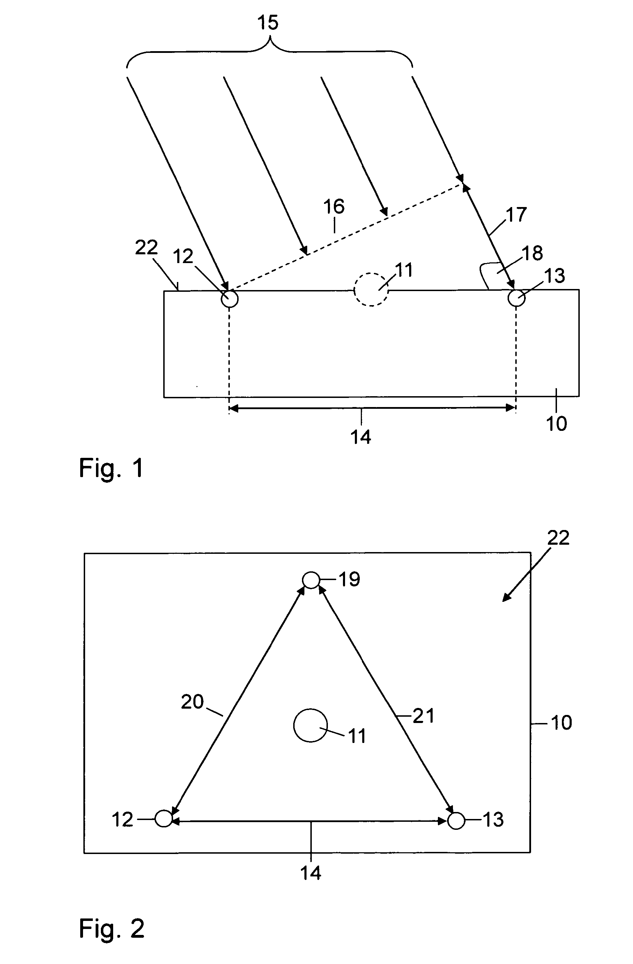

Das erfindungsgemäße Verfahren zum Nachführen zweier Kommunikationsteilnehmer eines Satelliten-Kommunikationssystems, das auch als Tracking bekannt ist, basiert auf der Auswertung jeweiliger Phasendifferenzen eines von mehreren Detektoren einer Detektoranordnung eines Kommunikationsteilnehmers empfangenen Signals. Die Phasendifferenzen können unmittelbar zur Berechnung und anschließenden Elimination eines Fehlwinkels verwendet werden, wobei bei eliminiertem Fehlwinkel jeweils zwischen zwei der Anzahl an Detektoren ermittelte Phasendifferenz zu Null wird. Das hierbei verwendete Prinzip wird nachfolgend anhand der schematischen Darstellungen der Figuren 1 und 2 näher erläutert.

Fig. 1 zeigt in einer Querschnittsdarstellung eine Empfangseinheit 10 mit im Querschnitt zwei erkennbaren Detektoren 12, 13 der Detektoranordnung sowie einem optionalen (optischen) Empfänger 11. Fig. 2 zeigt die Empfangseinheit 10 in einer Draufsicht. Hierbei ist erkennbar, dass um den Empfänger 11 beispielhaft drei Detektoren 12, 13, 19 in einem jeweils vorgegebenen Abstand 14, 20, 21 angeordnet sind. Die Detektoranordnung kann auch mehr als drei Detektoren aufweisen, die dann vorzugsweise verteilt um den Empfänger 11 angeordnet sind. Die Detektoren 12, 13, 19 der Detektoranordnung sind in einer gemeinsamen Empfangsebene 22 angeordnet.

Die Empfangseinheit 10 ist in mindestens einem der beiden Kommunikationsteilnehmer des Satelliten-Kommunikationssystems vorgesehen. Vorzugsweise ist die Empfangseinheit 10 in einem Satelliten (nicht dargestellt) ausgebildet. Alternativ oder zusätzlich, kann, um die Leistung des Gesamtsystems optimieren zu können, die Empfangseinheit 10 auch in einer Bodenstation des Satelliten-Kommunikationssystems vorgesehen sein.

Die Empfangseinheit 10 dient zum Empfang und zur Auswertung eines optischen Signals 15, das von dem anderen Kommunikationsteilnehmer erzeugt ist. Das mit dem Bezugszeichen 15 gekennzeichnete optische Signal wird in herkömmlichen Tracking-Systemen von dem Empfänger 11 empfangen und hinsichtlich seiner Maximalamplitude ausgewertet. Der optische Empfänger 11 kann beispielsweise durch eine übliche Empfangseinheit, welche in der letzten Empfangs- und Trackingstufe aus einem FPA mit einer Anzahl an CCD (Charged Coupled Devices)-Einheiten ausgebildet ist, bestehen. Durch die Auswertung, von welchen der CCD-Einheiten das Signal 15 maximal in der Amplitude empfangen wird, kann ein Fehlwinkel bestimmt werden.

Bei dem erfindungsgemäßen Verfahren trifft das Signal 15 mit seiner Wellenfront 16 zunächst auf den Sensor 12 auf und muss bis zum Auftreffen auf den Detektor 13 zusätzlich die Wegdistanz 17 zurücklegen. Aus der Wegdistanz 17 ergibt sich eine Phasendifferenz zwischen den Detektoren 12 und 13. In entsprechender Weise lässt sich auch eine jeweilige Phasendifferenz zwischen den Detektoren 12 und 19 sowie den Detektoren 13 und 19 ermitteln.

Sofern die Empfangseinheit mehr als drei Detektoren aufweist, wird eine jeweilige Phasendifferenz des Signals zwischen jeweils zwei der Anzahl in der Empfangsebene 22 angeordneten Detektoren ermittelt, welche zweckmäßig einen maximalen Abstand zueinander haben sollten.

Aus den jeweiligen Phasendifferenzen lässt sich ein Fehlwinkel des Signals 15 relativ zu der Empfangsebene 22 bestimmen. Der Fehlwinkel ist im Ausführungsbeispiel der Fig. 1 mit dem Bezugszeichen 18 gekennzeichnet. Der Fehlwinkel 18 kann unmittelbar dazu verwendet werden, durch eine Ausgleichsbewegung des die Empfangseinheit 10 enthaltenen Kommunikationsteilnehmers oder des das Signal 15 sendenden Kommunikationsteilnehmers, wenn dieser die Messung durchgeführt hat, nachzuführen, so dass das Signal 15 senkrecht auf die Empfangsebene 22 auftrifft und die Phasendifferenzen zu Null werden.

Um möglichst präzise Phasendifferenzen zwischen jeweiligen Sensorpaaren zu erhalten, ist vorgesehen, die Detektoren fortlaufend zu kalibrieren. Beispielsweise wird hierzu ein Kalibrierungssignal für die Bestimmung von Signalverzögerungen zwischen den Detektoren verwendet. Ebenso ist es zweckmäßig, Verzerrungen der Satellitenbewegungen durch eine fortlaufende Kalibrierung zu eliminieren. Für die Kalibrierung der Signallaufzeiten der jeweiligen Empfangssignale der verschiedenen Detektoren zu der Empfangs- und Auswerteeinheit existieren bekannte System, welche hierfür implementiert werden. Diese beruhen auf der Aussendung eines Signals von der Auswerteeinheit und anschließender Reflektion dieses Signals bei den jeweiligen Detektoren. Bezüglich der Vibrationsbewegungen des Satelliten und der dazu benötigten Korrektureinheit existieren ebenfalls Systeme zur Korrektur dessen, welche auf der Verwendung von Beschleunigungsmessern beruhen. Durch eine solch beschriebene, kontinuierliche Kalibrierung können atmosphärische Störungen minimiert werden, da diese in die Korrektur der jeweiligen Detektoren im Rahmen der Kalibrierung einfließen.

Zur Bestimmung der Phasendifferenzen kann z.B. das zwischen den Kommunikationsteilnehmern ausgetauschte Kommunikationssignal verwendet werden. Dies ist dann zweckmäßig, wenn eine sehr hohe Auflösung der Phasendifferenzen als Ergebnis der Berechnungen von Korrelationsfunktionen möglich sein soll. Bei einer OOK-Modulation kann das Signal direkt zur Ermittlung der Phasendifferenzen verwendet werden.

In einer anderen Ausgestaltung besteht die Möglichkeit, ein zusätzlich zu dem Kommunikationssignal übertragenes Nachführ- bzw. Bakensignal (sog. Beacon) zur Ermittlung der Phasendifferenzen zu verwenden, wobei das Nachführsignal vorzugsweise von einem Laser erzeugt wird. Es bietet sich dabei an, ein CW (Continuous Wave)-Nachführsignal zu verwenden. Die das Nachführsignal aussendende Sendeeinheit (z.B. ein Laser) kann mit einem Multiplex-Signal, das aus einem Kommunikationsanteil und dem Nachführanteil besteht, moduliert werden. Dieses Signal könnte dann ein mit einem Code behaftetes Signal sein, welches mit Hilfe von Korrelations- bzw. Autokorrelationsfunktionen eine exakte Bestimmung der zeitlichen Verschiebung in der Empfangszeit bzgl. der jeweiligen Detektoren verwendet werden kann. Ein solches Code behaftetes Signal stellt beispielsweise die Grundlage von Galileo-Navigationssignalen dar.

Um die Periodizität der Phase (Lambda/2 = 3 Lambda/2 = 5 Lambda/2 ...) zu eliminieren, ist vorgesehen, eine aus der Radartechnik verwendete Lösung anzuwenden: Diese ist als FMCW-Frequenzrampen- bzw. -stufentechnik bekannt. In diesem Zusammenhang wird diese auch als FSCW (Frequency Step CW Signal)-Technik bezeichnet. Wenn unterschiedliche Empfänger bzw. Detektoren lediglich auf eine Frequenzstufe abgestimmt sind, empfangen die unterschiedlichen Detektoren die rampenförmigen Signale, die auf diese Frequenz abgestimmt ist, zu unterschiedlichen Zeiten. Die Bandbreite der Frequenzrampe wird in Relation zu einem möglichen Doppler-Effekt gewählt. Der Empfänger wird auf die Mitte der Frequenzstufe abgestimmt, so dass ein eventueller Doppler-Effekt eliminiert ist.

Für die Genauigkeit der Ermittlung der Phasendifferenz ist der Abstand der Detektoren 12, 13, 19 von Bedeutung. Als Beispiel: Bei einer Wellenlänge von Lambda/2 = 775 nm als Gangunterschied zwischen zwei Detektoren und einem Abstand von 1 m derselben führt dies zu einem Phasendifferenzwinkel von 7,75 . 10⁻⁷ rad = 4,45 10⁻⁵°, wobei eine erreichbare Genauigkeit von weniger als 5,7 . 10⁻²° erreicht wird. Die Dauer von Lambda/2 beträgt 2,68 . 10⁻¹⁵ Sekunden.

Hierdurch ist eine sehr genaue Phasenmessung möglich, wodurch die Nachführung der beiden Kommunikationsteilnehmer auf verbesserte Weise möglich ist. Wie eingangs bereits erläutert, kann die in den Figuren dargestellte Empfangseinheit 10 sowohl in einem Satelliten als auch in einer Bodenstation vorgesehen sein.

Durch die größere Tracking-Genauigkeit ist es möglich, ein stärker fokussiertes Übertragungssignal zu verwenden und die Strahlbreite des Signals zu reduzieren. Hierdurch kann der Sender des Signals mit geringerer Leistung und geringeren Betriebskosten betrieben werden. Andererseits kann bei gleicher zur Verfügung stehender Energie eine größere Distanz zwischen den Kommunikationsteilnehmern überbrückt werden. Hierdurch ist eine sog. Deep-Space-Kommunikation möglich, bei der Entfernungen von mehr als 100000 km überbrückt werden können.

Da die Phase des durch die Empfangseinheit 10 empfangenen Signals durch alle Detektoren der Empfangseinheit 10 gemessen wird, ist der Einfluss einer Phasenverzerrung aufgrund von atmosphärischen Störungen beim Empfang durch die jeweiligen Detektoren, unter gewissen Randbedingungen beispielsweise der räumlichen Ausdehnung des System betreffend, sowie des zeitlichen Messraums, gleich. Atmosphärische Störungen haben deshalb keine besondere Auswirkung.

### Bezugszeichenliste

- 10: Empfangseinheit
- 11: optischer Empfänger
- 12: Detektor
- 13: Detektor
- 14: Abstand zwischen Detektor 12 und 13
- 15: Signal
- 16: Wellenfrontebene mit gleicher Phase
- 17: Wegdistanz
- 18: Fehlwinkel
- 19: Detektor
- 20: Abstand zwischen Detektor 12 und 19
- 21: Abstand zwischen Detektor 13 und 19
- 22: Empfangsebene

## Patentansprüche

1. Verfahren zum Nachführen zweier Kommunikationsteilnehmer eines optischen Satelliten-Kommunikationssystems, insbesondere eines Satelliten sowie einer Bodenstation, zur Bereitstellung einer Kommunikationsverbindung zwischen den zwei Kommunikationsteilnehmern, bei dem:
- ein erster der beiden Kommunikationsteilnehmer ein Signal (15) an einen zweiten der beiden Kommunikationsteilnehmer überträgt;
- der zweite Kommunikationsteilnehmer eine Detektoranordnung mit mehreren Detektoren (12, 13, 19) in einer gemeinsamen Empfangsebene 22 umfasst, durch die jeweils die Phase des Signals (15) erfasst wird, wobei durch ein Phasenverarbeitungsmittel Phasendifferenzen zwischen den Phasen ermittelt werden;
- aus den Phasendifferenzen ein Fehlwinkel (18) der Ausrichtung des Signals (15) zu der Empfangsebene (22) ermittelt wird;
- der Fehlwinkel (18) durch einen Nachführrechner verarbeitet wird, um die Empfangseinheit des jeweiligen Kommunikationsteilnehmers auf das Signal (15) auszurichten, so dass die Phasendifferenz zu Null wird;
**dadurch gekennzeichnet, dass**
die Detektoren (12, 13, 19) der Detektoranordnung kontinuierlich kalibriert werden.

2. Verfahren nach Anspruch 1, **dadurch gekennzeichnet, dass** zur Kalibrierung mittels eines Kalibrierungssignals Signalverzögerungen zwischen den Detektoren (12, 13, 19) bestimmt werden

3. Verfahren nach Anspruch 1 oder 2, **dadurch gekennzeichnet, dass** das Signal (15) ein zusätzlich zum eigentlichen optischen Kommunikationssignal ein von einem Laser erzeugtes optisches Nachführsignal (Beacon) ist.

4. Verfahren nach Anspruch 3, **dadurch gekennzeichnet, dass** das optische Nachführsignal ein CW (Continuous Wave) Nachführsignal ist.

5. Verfahren nach Anspruch 3 oder 4, **dadurch gekennzeichnet, dass** das optische Nachführsignal in einem Multiplex-Signal übertragen wird, das zusätzlich einen Kommunikationsanteil umfasst.

6. Verfahren nach einem der vorhergehenden Ansprüche, **dadurch gekennzeichnet, dass** das Signal (15) ein zwischen dem ersten und dem zweiten Kommunikationsteilnehmer über die optische Kommunikationsverbindung ausgetauschtes Kommunikationssignal ist.

7. Verfahren nach einem der vorhergehenden Ansprüche, **dadurch gekennzeichnet, dass** unter Nutzung einer FMCW (Frequency Stepp CW Signal) Frequenz-Rampe die Mehrdeutigkeit der Phasendifferenz in Bezug auf 2 Pi sowie die Eingrenzung des möglichen zu korrigierenden Messbereichs behoben wird.

8. Verfahren nach einem der vorhergehenden Ansprüche, **dadurch gekennzeichnet, dass** die Ermittlung der Phasendifferenzen zusätzlich zur Ermittlung einer Maximalamplitude des Signals (15) erfolgt, um eine auf dieser Maximalamplitude basierende Ermittlung des Fehlwinkels (18) mit Hilfe der Differenzsignale auf Grundlage der Phasendifferenz zu verbessern.

9. System zum Nachführen zweier Kommunikationsteilnehmer eines optischen Satelliten-Kommunikationssystems, insbesondere eines Satelliten bzw. dessen optischer Sendeeinheit sowie einer Bodenstation, zur Bereitstellung einer Kommunikationsverbindung zwischen den zwei Kommunikationsteilnehmern, bei dem:
- ein erster der beiden Kommunikationsteilnehmer eine Sendeeinheit umfasst, mit der ein Signal an einen zweiten der beiden Kommunikationsteilnehmer übertragbar ist;
- der zweite Kommunikationsteilnehmer eine Detektoranordnung mit mehreren Detektoren (12, 13, 19) in einer gemeinsamen Empfangsebene (22) umfasst, durch die jeweils die Phase des Signals (15) erfassbar ist;
- der zweite Kommunikationsteilnehmer ein Phasenverarbeitungsmittel und ein Fehlwinkelbestimmungsmittel umfasst, wobei durch das Phasenverarbeitungsmittel Phasendifferenzen zwischen den Phasen und durch das Fehlwinkelbestimmungsmittel aus den Phasendifferenzen ein Fehlwinkel (18) der Ausrichtung des Signals (15) zu der Empfangsebene (22) ermittelbar ist;
- der erste und/oder der zweite Kommunikationsteilnehmer einen Nachführrechner umfassen, dem der Fehlwinkel (18) zur Verarbeitung bereit gestellt wird, um den ersten und/oder den zweiten Kommunikationsteilnehmer auf das Signal (15) auszurichten, so dass sich Phasendifferenzen von Null ergeben;
**dadurch gekennzeichnet, dass**
der Detektoranordnung eine Kalibrationsvorrichtung zugeordnet ist, die dazu ausgebildet ist, die Detektoren (12, 13, 19) der Detektoranordnung kontinuierlich zu kalibrieren.

10. System nach Anspruch 9, **dadurch gekennzeichnet, dass** in der Empfangsebene zusätzlich eine Detektoranordnung eine Sende- und/oder eine angeordnet ist, wobei die mehreren Detektoren um die Sende- und/oder Empfangseinheit herum angeordnet sind.

11. System nach Anspruch 9 oder 10, **dadurch gekennzeichnet, dass** die Detektoranordnung zumindest drei, in einer Empfangsebene (22) angeordnete Detektoren (12, 13, 19), welche jeweils die Phase des Signals erfassen, umfasst.

12. System nach einem der Ansprüche 9 bis 11, **dadurch gekennzeichnet, dass** der jeweilige Abstand (14, 20, 21) zweier Detektoren (12, 13, 19) in Abhängigkeit einer vorgegeben Genauigkeit bei der Ermittlung der Phasendifferenzen, sowie zu den vorherrschenden und in die Betrachtungen einzufließenden Umgebungseinwirkungen gewählt ist.

13. System nach einem der Ansprüche 9 bis 12, **dadurch gekennzeichnet, dass** der erste Kommunikationsteilnehmer der Satellit und der zweite Kommunikationsteilnehmer die Bodenstation, oder umgekehrt, ist.
